# EUROPEAN PATENT SPECIFICATION

(11) **EP 0 614 783 B1**
(45) Date of publication and mention of the grant of the patent: **17.12.1997**
(21) Application number: 94103792.1
(22) Date of filing: 12.03.1994
(51) Int. Cl.: B60R 1/06

(54) **Mirror angle adjusting device for rearview mirrors**
Spiegelwinkel-Verstellungsvorrichtung für Rückspiegel
Dispositif de réglage de l'orientation d'un miroir pour rétroviseurs

(30) Priority: 12.03.1993 JP 16514/93
(43) Date of publication of application: 14.09.1994
(73) Proprietor: MURAKAMI KAIMEIDO CO., LTD, Shizuoka-Ken, 422 (JP)
(72) Inventor: Narukawa, Yoshihiko, Shizuoka-ken, 425 (JP)
(74) Representative: Riederer Freiherr von Paar zu Schönau, Anton

(56) References cited:
- EP-A- 0 463 563
- JP-U- 4 125 944

## Description

### Background of the Invention

### 1. Field of the Invention

The present invention relates to a rearview mirror mounted on a motor vehicle, and especially to a device for adjusting the mirror angle for rearview mirrors in which the mirror angles can be changed rapidly to see and confirm around the rear wheel when the vehicle is driven backward, e.g. when parking the vehicle near the pavement edge.

### 2. Description of the Prior Art

Many conventional rearview mirrors are used for vehicles, and the mirror angle can be adjusted in a vertical and a horizontal direction by an electrically driven remote-control operation. This kind of rearview mirrors has a mirror holder with a mirror in a mirror body and an actuator unit for adjusting the angle of reflection.

For example, U.S. Pat. Nos. 4,693,571 and 4,696,555 disclose an actuator unit including a first reversible motor and a drive transmission for adjusting the mirror reflection angle in a vertical direction, and including a second reversible motor and a drive transmission for adjusting the mirror reflection angle in a horizontal direction. The actuator housing has a central pivot to support the mirror tiltingly, movable pivots for adjusting the vertical and the horizontal reflection angle of the mirror are projected from the actuator housing which are provided at positions apart from the central pivot in an orthogonal direction equidistantly, and these pivots are enganged in pivot sockets of a rear surface of the mirror holder. By an actuation of the first or the second motor, a screw is rotated and the movable pivot provided with an adjust nut is moved to adjust the vertical or the horizontal reflection angle of the mirror.

In conventional rearview mirrors, the rear wheels side of the vehicle can not be seen since the mirror is normally set at its angle to see and observe the next vehicle following thereafter. For example, when the vehicle is driven back to approach the street side, it is preferred to change the reflection angle of the mirror widely and downwardly to enable the back sight of the area around the rear wheel which is opposite to the driver's seat. However, it takes a time to change the angle, and burdens the driver.

To overcome the foregoing problems, as disclosed by Japanese Utility Model Application Publication No. Hei 4-125944, the inventor invented a mirror angle adjusting device (apparatus) for an electric rearview mirror of a vehicle, in which a means for rapidly changing the angle of the mirror is contained in the actuator unit to push out and back a movable pivot only with a determined stroke for adjusting the vertical or the horizontal reflection angle of the mirror, and a shift lever of the drive transmission is operated to the reverse side when the vehicle is driven back, thereby a third reversible motor is driven to rotate the mirror surface downwardly automatically.

By the foregoing Japanese Utility Model Application Publication, it is disclosed that the mirror angle adjusting device is separately assembled with a rapid angle changing means from the two sets of motors and drive transmission elements for adjusting the vertical and horizontal reflection angle of the mirror, said rapid angle changing means comprising a worm fixed on an output shaft of the third reversible motor, a third worm wheel engaging the worm, a cylindrical portion with a helical cam groove which is inserted in a hollow boss of the worm wheel so as to drive a movable pivot for adjusting the vertical and horizontal reflection angle, a screw rod which is protruded outside from a center of the end surface of the cylindrical portion with the cam to threadingly engage the adjusting nut of the movable pivot, and a pin which is provided protruding from a boss inner surface of the worm wheel to engage the cam groove so as to alter the rotation of the worm wheel to a movement in an axial direction of the screw. In the foregoing device, the normal adjustment of the vertical and horizontal angle of the mirror is easily achieved by an electric remote control operation, the motor for changing the mirror angle rapidly is operated to actuate the cylindrical cam so as to shift only a movable pivot for adjusting the reflection angle of the vertical and horizontal direction to the determined stroke to face the rear of the vehicle, and the mirror can thereby rapidly change its angle to the downward angle capable of seeing to confirm the rear sight around the rear wheel.

In the means for changing the angle rapidly, the worm wheel is rotatably arranged at the determined position in the actuator unit housing (at the position of the outer side of the first worm wheel in a normal vertical reflection angle adjusting device of the actuator unit housing). Since both end surfaces of the boss of said worm wheel are loosely engaged in annular-shape recesses which are formed at the opposite position of the housing inner wall, chattering of the worm wheel occurs in the thrust direction. Since this chattering of the worm wheel in the thrust direction transmits to the cylindrical cam and to the movable pivot, the mirror is caused to blurr by changing the angle rapidly and the sight confirmation ability is decreased, causing troubles in driving the vehicle backwards. Since the mirror angle adjusting device is designed to be a relatively long device, a screw rod being protruded outwardly from the end surface center of the cylindrical portion with the cam groove, the place where the rapid angle changing motor and the cylindrical cam are contained becomes wide and it is necessary to widen the thickness of the actuator unit housing, therefore it is impossible to assemble the device in the mirror body easily.

### Summary of the Invention

The object of the present invention is to provide a rearview mirror angle adjusting device in which the mirror surface is prevented from chattering.

Another object of the present invention is to provide a rearview mirror angle adjusting device in which the rearward sight and secure ability, especially the ability to confirm to see around the rear wheel of the vehicle side opposite of a driver's seat, is improved, and to provide a mirror angle adjusting device designed so compact that the actuator unit housing may be thin.

According to the present invention, a device for adjusting the reflection angle of a rearview mirror for a vehicle, including a mirror body, a mirror holder with a mirror, an actuator unit fixed in the mirror body for adjusting the mirror reflection angle, first and second movable pivots disposed in the actuator unit housing, first and second drive transmission elements each with a screw rod and a nut disposed in the housing for vertically and horizontally adjusting the reflection angle of the mirror, and a means for changing the mirror angle rapidly, which means is disposed in the housing in a position coaxial to the first movable pivot to displace the mirror surface to a determined wide angle, and is formed with a rotatable cylindrical action block inside of which a sliding member is disposed which has a screw rod which is threaded to engage via the nut the first movable pivot and is axially shiftable by a rotation of the action block driven by a motor, the action block comprising a rotatable cylindrical main body which is disposed on a coaxial line to the first screw rod, a gear being disposed on the periphery of the action block in a rotation-locked relation to the action block, is characterized in that the gear disposed on the periphery of the action block is a fan type gear; an annular groove is formed around the periphery of the cylindrical main body; and a support member fixed in the housing is provided with a plurality of pawls engaged in the annular groove of the action block periphery surface for rotatably supporting the action block.

The construction according to the invention can be preferably used in a rearview mirror device according to the design of claim 2.

In the means for changing the mirror angle rapidly, a normal tilting actuation of the vertical and horizontal angle can be achieved by an electric remote control operation. When the driver wants to see the rear sight around rear wheels, the motor for changing the angle rapidly is operated to move the sliding member in an axial direction by a rotation of the action block, the movable pivot for adjusting the vertical reflection angle of the mirror is shifted forwardly with a determined stroke so as to change the mirror angle downwardly which is enough to see the area around the rear wheels of the vehicle. According to the present invention, the effect is achieved as follows: the extent of the rapid changing of the mirror angle can be mechanically and preliminarily be set by the threaded cam groove which is provided on the sliding member so as to achieve the most accurate displacement value of the mirror angle. The action block is rotatably supported by the engagement of the plurality of pawl ends of the support member in the groove of the action block outer periphery, thereby the thrust direction chattering of the action block is overcome and the sight ability is improved to provide a safe driving. Further the device of the present invention has a simple construction and can be designed compact by preventing the actuator unit housing from being thick, and a simple assembling work and an economical exploitation of spaces can be achieved.

Claim 3 defines in more detail a possible and preferred construction of the adjusting device, allowing a particularly flat and compact construction. In tilting the mirror normally, worm wheels are rotated each via a worm by operating the first and the second motors, and in accordance with the rotation of the worm wheels, adjusting nuts are rotated by guide grooves which are provided on an the inner walls of bosses of the worm wheels and by protruding elements of the adjusting nuts to engage the guide groove respectively. Since each adjusting nut is threaded to engage the respective screw rod of the sliding element which is under a fixed condition by the plurality of pawls, in accordance with the rotation of worm wheels, the adjusting nuts go ahead or go back to tilt the mirror vertically and horizontally via the respective movable pivot.

When the motor for changing the mirror rapidly is operated, the action block rotates by the determined angle via a worm, a twin gear and the fan gear. The action block rotates, the sliding member is pushed up by the cam and the vertically adjusting nut which engages the screw rod of the sliding member is progressed to change the mirror to the determined angle rapidly. When the motor for changing the angle rapdily is operated reversely, the sliding member is pulled to reset the mirror surface to the original condition before the angle thereof was changed.

According to the present invention, the displacement angle of the mirror upon rapidly changing or rapidly returning the mirror can be mechanically and preliminarily set by the angle of the threaded groove which is formed on the cylindrical portion of the sliding member, and the most accurate degree of the displacement angle can be achieved. Since the action block is rotatably supported by four pawls edges of the support member engaging in the groove which is provided on the outer periphery of the action block, any thrust acting on the action block is prevented from causing chattering thereby improving the sight ability of the mirror. In the device according to the present invention, the structure of changing the mirror angle rapidly can be compact to accomodate in a narrow space while making the assembling work simple.

The above and other objects, features and advantages of the present invention will become apparent from the following description and the appended claims taken in conjunction with the accompanying drawings which show by way of example a preferred embodiment of the present invention and in which like component parts are designated by like reference numerals throughout the various figures.

### Brief Description of the Drawings

- Fig. 1: is a front view of an electric remote control mirror assembly according to the present invention;
- Fig. 2: is a longitudinal cross-sectional view through the mirror assembly of Fig. 1 taken along the section line II - II of Fig. 1;
- Fig. 3: is a cross-sectional view through the mirror assembly of Fig. 1 taken along the section line III - III of Fig. 1;
- Fig. 4: is a front view of the mirror assembly illustrating a partial cut-away view of an actuator unit;
- Fig. 5: is a detailed longitudinal cross-sectional view of parts of the mirror assembly of Fig. 2;
- Fig. 6: is a longitudinal cross-sectional view of the mirror which illustrates the condition of a mirror angle being changed rapidly from a state which is illustrated by Fig. 4;
- Fig. 7: is a cross-sectional view through the mirror of Fig. 6 taken along the section line VII - VII of Fig. 6;
- Fig. 8: is a detailed plan view of a worm gear according to the present invention;
- Fig. 9: is a plan view illustrating a fan type gear according to the present invention;
- Fig.10: is a cross-sectional view through the fan type gear of Fig. 9;
- Fig.11: is a plan view illustrating a sliding member of the device according to the present invention;
- Fig.12: is a cross-sectional view through the sliding member of Fig. 11;
- Fig.13: is a development view of a cam surface of the sliding member of Fig. 11;
- Fig.14: is a plan view illustrating an action block of the device;
- Fig.15: is a front view illustrating a partial cut-away view of the action block of Fig. 14;
- Fig.16: is a plan view of a support member of the device;
- Fig.17: is a longitudinal cross-sectional view of the support member of Fig. 16;
- Fig.18: is a front view illustrating a part of a front housing inner surface of an actuator unit; and
- Fig.19: is an exploded perspective view of essential parts mounted in the mirror angle adjusting device, some of the elements being shown somewhat tilted to depict the mirror-off face thereof.

### Description of the Preferred Embodiment

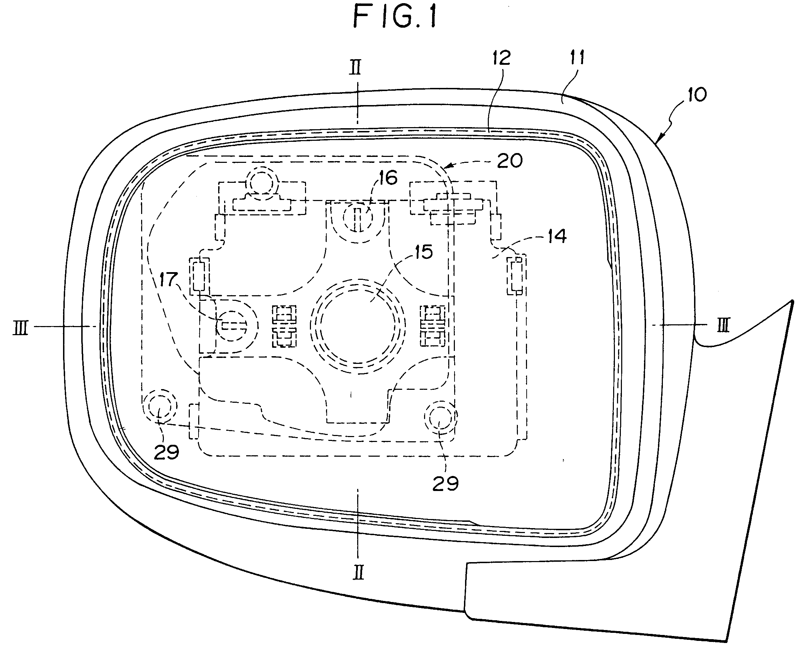

The present invention will now be described in detail with reference to the drawings. In a rearview mirror assembly according to the invention as shown in Fig. 1, a door mirror is mounted at the left side of the vehicle, which driver's seat is provided at the right side, as seen in a travelling direction. If, however, in a vehicle the driver's seat is provided at the left side, it is preferred that a symmetrically designed rearview mirror assembly which will be described hereinafter is mounted at the right side of the vehicle body (not shown). A rearview mirror assembly 10 includes an actuator unit 20 in a mirror body 11 for supporting a mirror holder 12 with a mirror 13 capable of adjusting the reflection angle of the mirror. In a manner disclosed by European Patent No. 0 337 059 B1, a pivot plate 14 is detachably mounted on a rear surface of the mirror holder 12 and a central pivot 15 and pivot retainers 16, 17 for adjusting the vertical and the horizontal reflection angle are also provided on the rear surface. The central pivot 15 is formed to have a hollow spherical segment-shape, the edge portion of which is provided protruding from the mirror holder 12 rear surface.

The housing of the actuator unit 20 is formed by engaging a front (half) housing 21a and a rear (half) housing 21b with each other. The rear housing 21b has a concave spherical surface socket 22 on the outer periphery thereof to support the mirror. The central pivot 15 of the mirror holder side is engaged by the concave spherical surface socket 22 of the rear housing outer periphery. The pivot 15 is fastened by a tapping screw 23 screwed into a boss hole 18, and a helical spring 24 by a determined torque to support the mirror on the actuator unit. In the actuator unit, after accomodating necessary assemblies in the housing, the front housing 21a and the rear housing 21b are engaged with each other, are fastened by screws 19 through small holes 19a and are fixed in the mirror body 11 by screws 29 through small holes 29a (as shown in Fig. 1, Fig. 4 and Fig. 18).

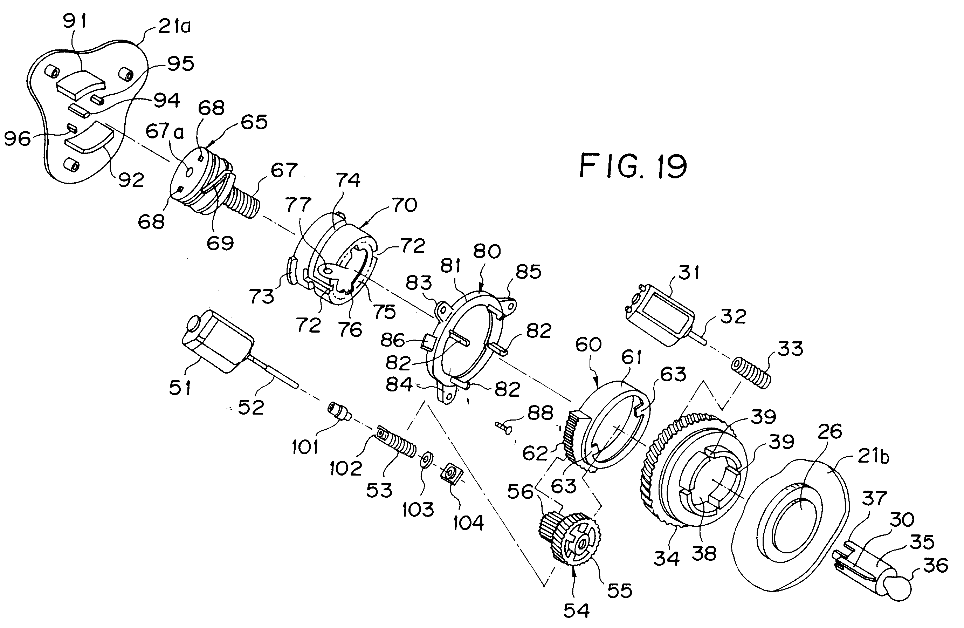

In the actuator unit, throughgoing holes 26, 27 are provided on the rear housing 21b which are positioned in an orthogonal direction from the central pivot 15 with a certain distance and movable pivots 36, 46 are provided protruding from the holes to adjust the vertical and the horizontal reflection angle of the mirror. Movable pivots 36, 46 are engaged in the pivot retainers 16, 17 respectively and a plurality of pawls 37, 47 (four pawls as shown by Fig. 19) are uniformly extending to one direction from the pivot root portion to form adjusting nuts 35, 45 (Fig. 1 to Fig. 5).

In the housing of the actuator unit, means for vertically and horizontally adjusting the mirror reflection angle and a means for rapidly changing the mirror surface widely and downwardly are accomodated.

In the means for adjusting the vertical direction mirror reflection angle, a frist reversible motor 31, a drive transmission element and a mechanism for altering the motor rotation to a reciprocating actuation are included, and in the means for adjusting the horizontal direction mirror reflection angle, a second reversible motor 41, a drive transmission element and a mechanism for altering the motor rotation to a reciprocating actuation are also included.

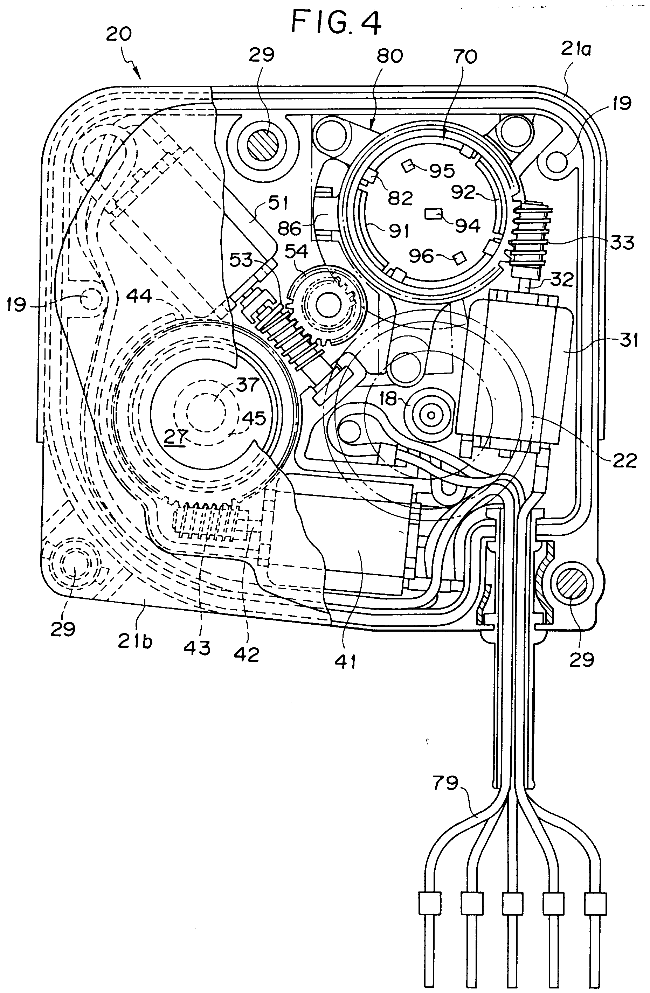

{Motor}: The first and the second motors 31, 41 are positioned separately from each other in the housing and a third reversible motor 51 is disposed therebetween to change the mirror angle rapidly. Each terminal of motors is connected with a control circuit (not shown) by using a harness line 79 (Fig. 4).

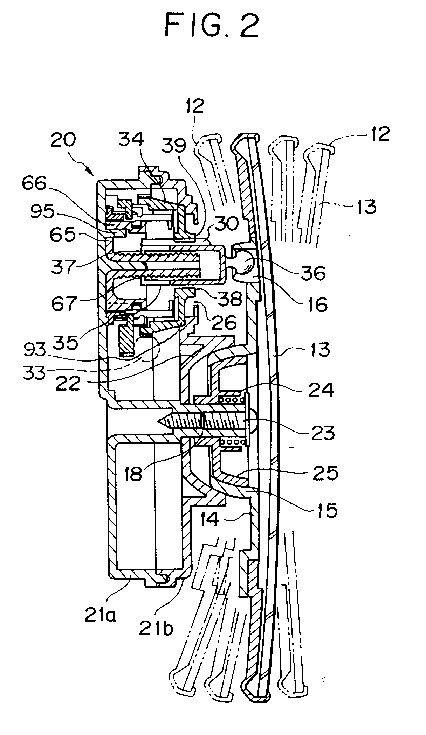

{First Drive Transmission Means}: The drive transmission means is formed by a first worm 33 fixed on a first motor shaft 32 and a first worm wheel 34 engaging the worm to vertically adjust the mirror reflection angle. A sliding member 65 with a screw rod 67 is disposed in a locking condition in the front housing coaxially with the worm wheel 34. Arc-shaped guides 91, 92 which will be described hereinafter are erected facing each other at the front housing bottom surface. The worm wheel 34 is held between the upper surfaces of the arc-shaped guides 91, 92 and a step portion 93 which is provided in the rear housing. Projections 94, 95, 96 are formed on the front housing 21a and penetrate into the sliding member 65 to lock its rotation (Fig. 2, Fig. 4, Fig. 5 and Fig. 19).

{First Rotate/Reciprocate Actuation Converting Means}: The means comprises the sliding member 65 the rotation of which is locked and which is disposed sliding in an axial direction of the movable pivot, the screw rod 67 of the sliding member 65, the plurality of pawls 37 to form the adjusting nut 35 which is resiliently threaded with a thread of the screw rod 67, a plurality of axial grooves 39 (four grooves as shown by Fig. 19) which are formed in a boss hole 38 of the worm wheel 34 and a fin 30 which is provided on the adjusting nut 35 to engage one of the axial grooves 39. The worm wheel 34 is rotated by operating the first motor 31 to push out and back the movable pivot 36 with the adjusting nut 35 so as to carry out a vertical adjustment of the reflection angle. At that time, the adjusting nut 35 is rotatingly slid in the axial direction by the engagement of the fin 30 of the adjusting nut 35 in the axial groove 39. At the time of the overload operation, the engangement of the pawl end and the thread ridge of the screw rod 67 is released by the elasticity of the pawl 37 to prevent the angle converting means from damage.

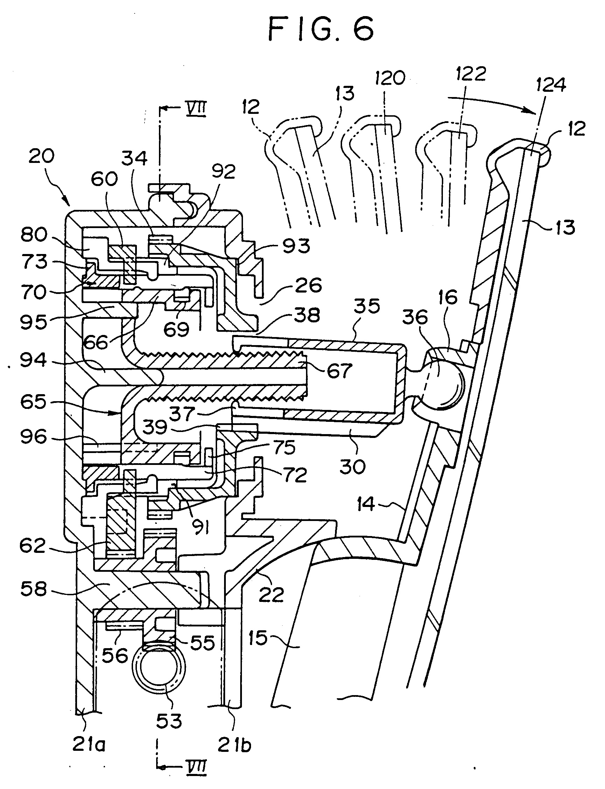

In Fig. 6, the numeral 120 illustrates a neutral position of the mirror, 122 illustrates a position where the mirror is faced most downwardly by the vertical direction adjusting device and 124 illustrates the position where the mirror is most tilted so as to see the rear wheel.

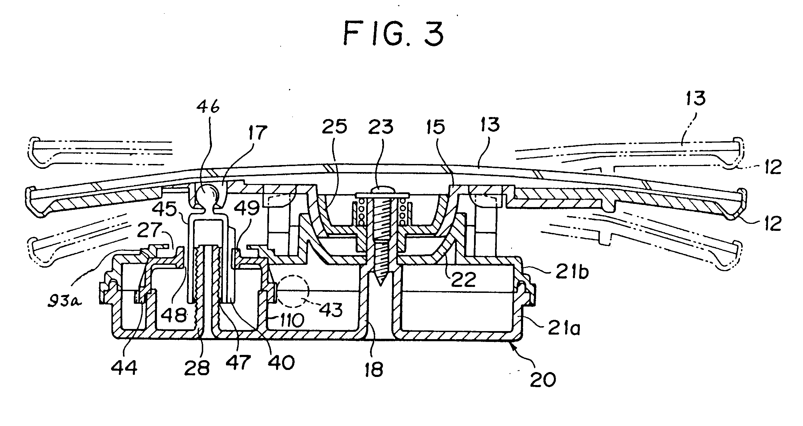

{Second Drive Transmission Means}: In the second drive transmission means for horizontally adjusting the mirror reflection angle, a second worm 43 is fixed on a second motor shaft 42 and a second worm wheel 44 engages the worm. The worm wheel is held between a ring-shaped step portion 110 which is provided in the front housing and a step portion 93a of the rear housing side. A screw rod 28 is formed in the front housing at the coaxial position with the worm wheel 44 and is threaded to engage with the pawl 47 so as to form the adjust nut 45. The worm wheel 44 is rotated by operating the second motor 41 to push out and back the movable pivot 46 which has the adjusting nut to engage the screw rod 28 so as to horizontally adjust the mirror reflection angle (Fig. 3 and Fig. 4).

{Second Rotate/Reciprocate Actuation Converting Means}: As illustrated by Fig. 3, the movable pivot 46 is connected with a fin 40 and the plurality of pawls 47 forming the adjusting nut 45. The pawls 47 are threaded to engage the screw rod 28 which is fixed in the housing. Similarly as with the worm wheel 34 of the first drive transmission means, an axial groove 49 is provided in an inner wall of a boss hole 48 of the worm wheel 44 to guide the fin 40 of the adjusting nut 45. It is possible to rotate and slide the adjusting nut 45 in an axial direction by a rotation of the worm wheel 44. At the time of the overload operation, similarly as with the pawls of the first converting means, the engagement of the pawls ends and the thread ridge of the screw rod 28 is released.

{Rapid Angle Changing Means}: As illustrated by Fig. 4, Fig. 5 and Fig. 6, in the means for changing the mirror angle rapidly, the mirror is rapidly tilted to the downward angle capable of a rear sight around the rear wheels by shifting the sliding member 65. Main elements of the means are the third motor 51, a third drive transmission means, an action block 70 which can also be defined to be an actuation block, and a support member 80. The third motor 51 is disposed in the housing between the first and second motors 31 and 41, and the other main elements including the drive transmission means are packed to accomodate with the first rotate/reciprocate converting means. The housing thickness of the actuator unit 20 is made to be thin to achieve a compact device for adjusting the rearview mirror angle.

As illustrated by Fig. 4, Fig. 5 and Fig. 7, the third drive transmission means comprises a worm 53 which is attached on an output shaft 52 of the third motor 51, a twin gear 54 and a fan type gear 60 which is positioned coaxially with the first screw rod 67 and engages an ordinary gear 56 of the twin gear to rotate in a determined angle. The upper step of the twin gear 54 is to be a worm wheel 55 to engage the worm 53 for changing the angle rapidly and the lower step thereof is formed in unit with the ordinary gear 56 to engage the fan type gear 60. A center aperture 57 of the twin gear is engaged with a shaft element 58 which is provided in the front housing.

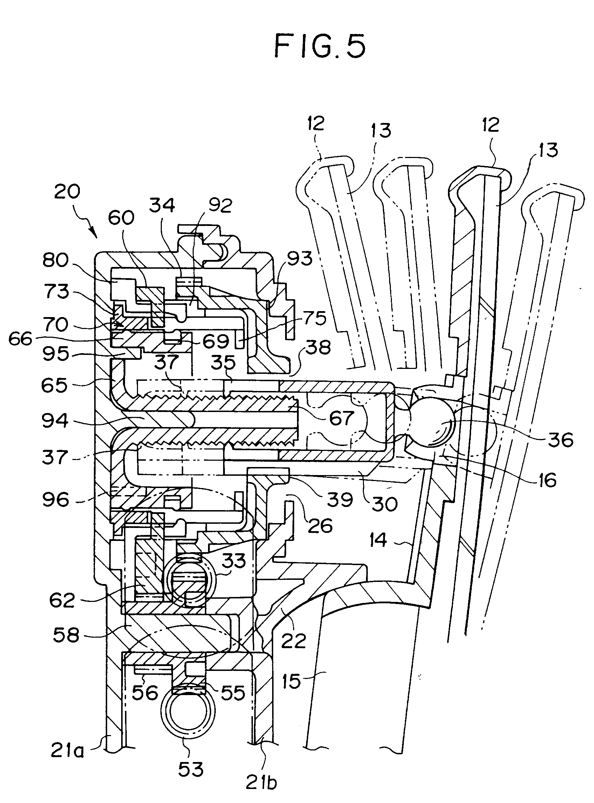

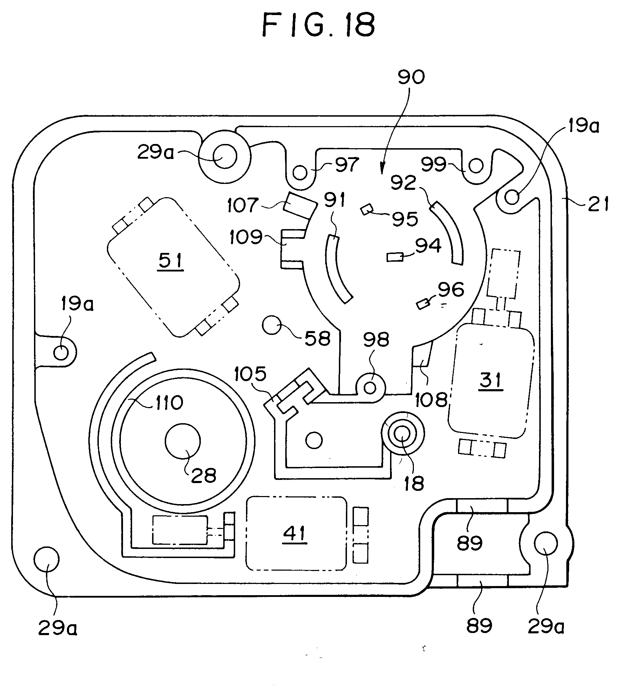

As shown by Fig. 5 and Fig. 18, the shaft element 58 is stood about at the center of the front housing 21a inner wall to support the twin gear 54. A recess portion 90 is formed at the inner wall of the front housing 21a around where the sliding member 65 is attached. In the recess portion 90, the pair of arc shape guides 91, 92 are provided to rotatably support the action block 70, and the pin-like projections 94, 95, 96 are also provided to fix the sliding member 65 in a locking manner. On the edge of the recess portion 90, three step portions 97, 98, 99 with threaded holes are provided to fix the support member 80, and stoppers 107, 108 are also provided to determine the rotation angle of the fin type gear 60. The threaded holes 19a, 29a, a clearance 89 through which the harness line 79 extends and a recess portion 109 to receive a location plate element 86 of the support member 80, which will be described hereinafter, are also formed in it.

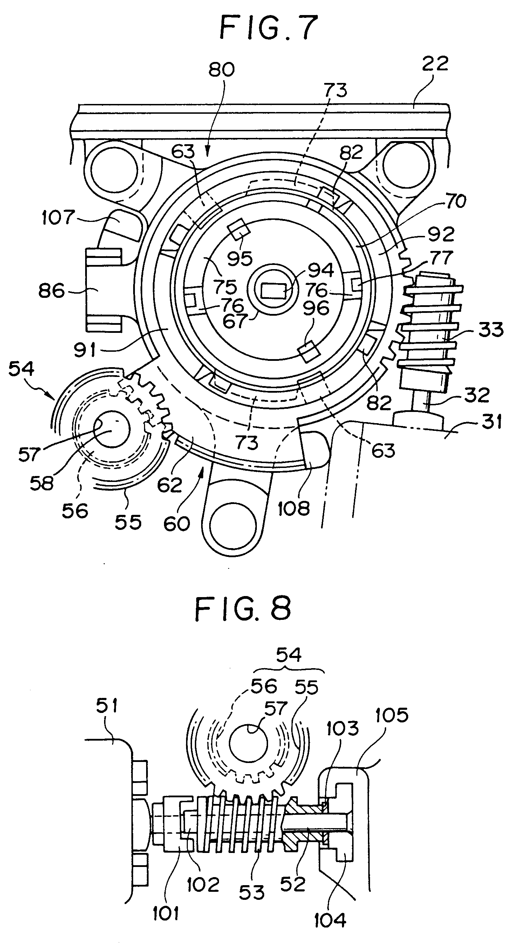

Fig. 8 illustrates the composition of the worm mechanism for rapid angle changing. The worm mechanism comprises: the ouput shaft 52 of the third motor 51, a coupling retainer 101 which is fixed on a root portion of the output shaft 52, the worm 53 into which the output shaft 52 is loosely inserted and which is formed with coupling teeth 102 at the end thereof to engage the coupling retainer 101, a bearing element 104 which is disposed at the end of the output shaft 52 via a washer 103 and a bearing retainer 105 which is formed at the inner wall of the front housing 21a. The thrust load on the worm 53 towards the shaft end and thrust load towards the reverse side is supported in the bearing retainer 105 and coupling retainer 101, respectively, to prevent the motor 51 from overloading and to reverse it easily.

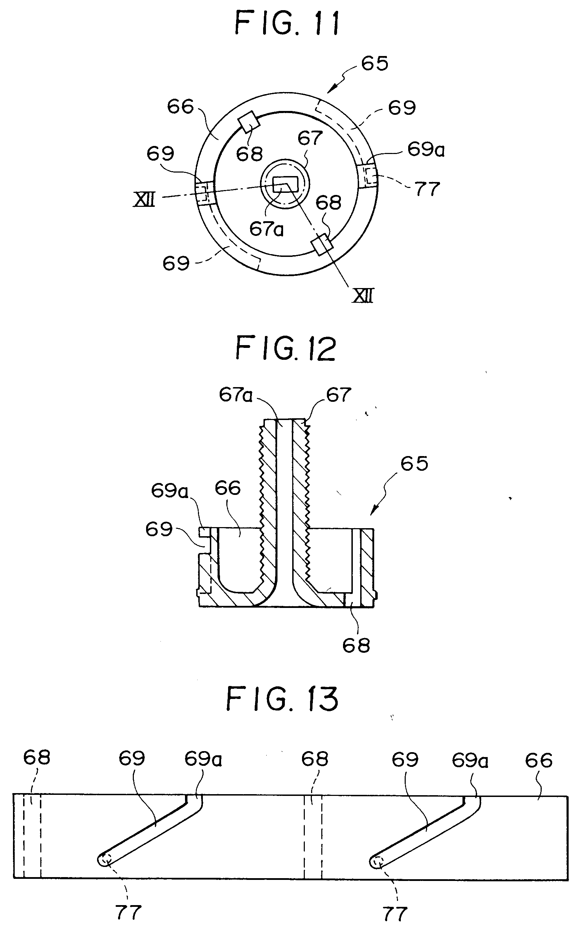

The sliding member 65 (Fig. 12) has a cylindrical portion 66 with a bottom, a spiral or helical type cam groove 69 which is formed on the outer periphery of the cylindrical portion 66 to convert the rotation of the action block 70 to an axial movement of the sliding member; the screw rod 67 extends over the height of the cylindrical portion 66 from the center of the cylindrical portion with the bottom at an opening of said portion, and engages with the first adjusting nut 35 threadedly, whereby the sliding member 65 is shifted in an axial direction according to the rotation of the action block 70. In the cam groove 69 of the cylindrical portion periphery, a pin 77 is engaged which is provided in the action block 70 as will be described hereinafter. A notch 69a is formed at the upper end of the cam groove 69. The pin-like projections 94, 95, 96 provided at the inner wall of the front housing 21a are insered in a central hole 67a and rotation locking holes 68, 68 respectively and the sliding member 65 is supported slidably in its axial direction but rotationally locked. The cylindrical portion 66 has the cylindrical cam which includes the pin 77 as a prime move part and the cam groove 69 as an inverted part, and the rotation of the action block 70 is converted to a linear movement of the sliding member 65 by the cam function (Fig. 6, Fig. 11, Fig. 12, Fig. 13).

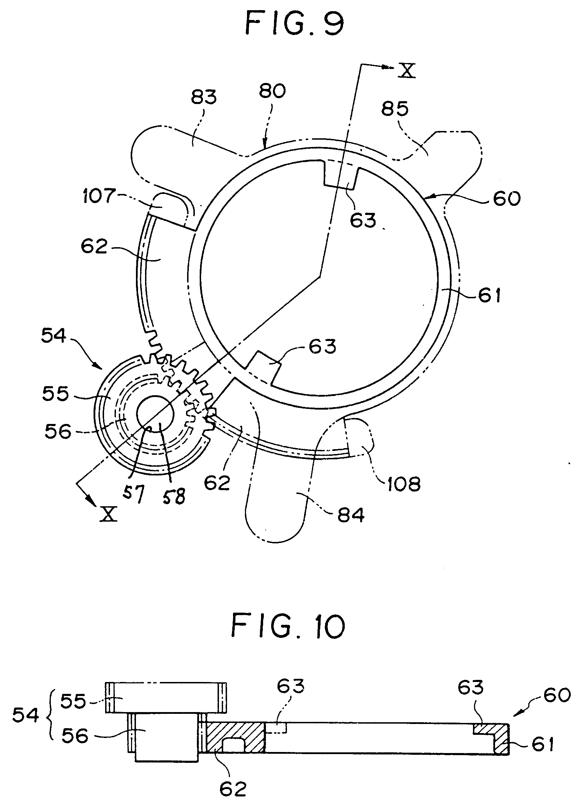

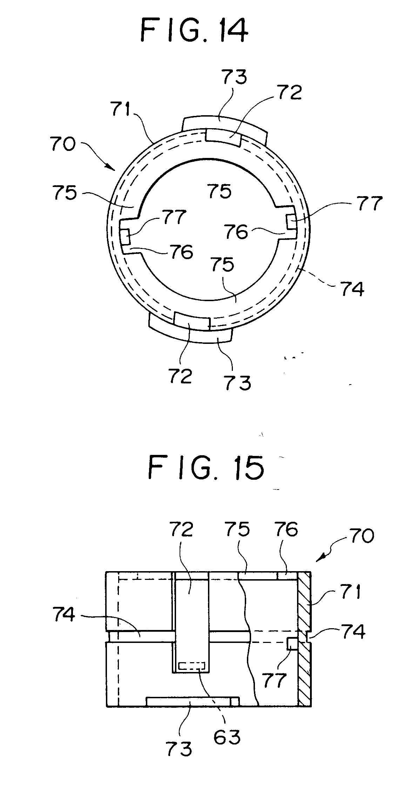

Fig. 9 and Fig. 10 illustrate a detail of the fin or fan shaped gear 60. The fan shaped gear 60 is formed with a fin or sector shaped gear element 62 at almost the angle of 120° of the periphery of an annular body 61, and a pair of projections or pieces 63 are provided opposite to the diameter inside direction of an upper edge of the annular body inner wall. The fan shaped gear 60 is disposed around the periphery of the action block 70 to rotate therewith and to engage with the outside of arc-shape guides 91, 92. The fan shaped gear 60 rotates with the action block 70 by engagement of the pieces 63 in slits 72 which are formed in a cylindrical body 71 of the action block 70 (Fig. 14, 15). The gear element 62 engages the ordinary gear 56 of the twin gear 54 and rotates reciprocally in an angle range according to the rotation of the motor 51 via the twin gear 54 and then the end surfaces of the fan shaped gear element 62 contact stoppers 107, 108 (Fig. 9, 18).

The action block 70 which is rotatably supported by arc-shaped guides 91, 92 is provided to convert the fan shaped gear 60 rotation to a linear axial movement of the cylindrical portion, and is formed with the cylindrical body 71, the pair of slits 72 which are formed in a diameter directon of the body 71, outer flanges 73 which are provided at the bottom of the slits 72, an annular groove 74 which is formed around the center of the periphery of the body 71, an upper inner flange 75 which is provided protruding inwardly from the periphery of the body 71, notch portions 76 which are formed in the flange 75, and the two pins 77 which are provided on the inside wall of the body 71 (Fig. 14, 15). Further, Fig. 19 indicates the action block 70 with a part of the cylindrical body 71 being cut away so that the pins 77 are shown protruding from the inside wall of the cylindrical body 71.

The pins 77, 77 are provided protruding from the inside wall of the action block 70 to engage with the cam grooves 69 of the sliding member 65. By a roation of the action block 70, the sliding member 65 is pushed up along the cam groove 69 of the member 65 by the pins 77, 77 then the adjusting nut 35 which is threaded to engage with the screw rod 67 of the sliding member, is also moved to change the mirror angle rapidly. Then the pieces 63 which are provided protruding from the inner surface of the fan shaped gear are engaged in the slits 72 which are provided in an axial direction of the action block periphery (Fig. 15).

The pieces 63, 63, protruding from the inside of the fan shaped gear 60 are inserted in the axial slits 72 of the action block 70 to transmit the fan shaped gear 60 rotation to the action block 70.

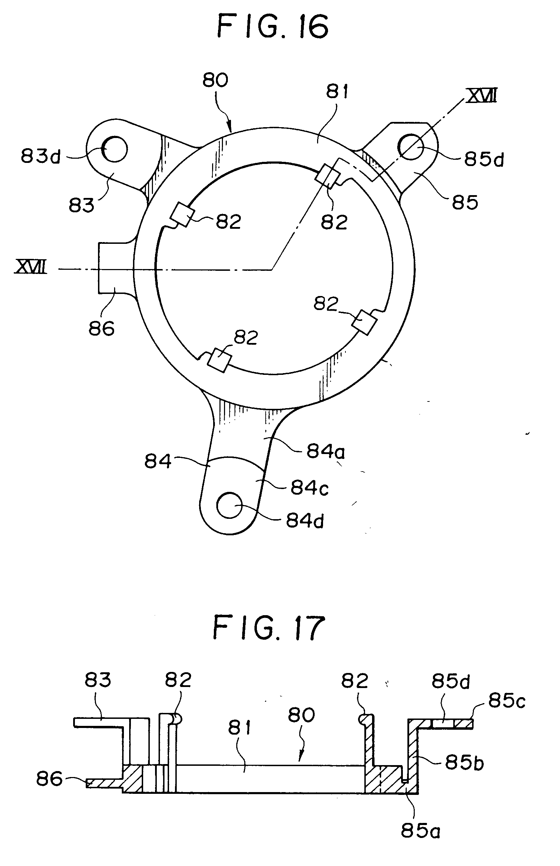

The support member 80 is formed with an annular body 81 provided to rotatably support the action block 70 inside of the annular body 81, four pawls 82 which are provided protruding from the inner periphery of the body 81 so as to engage the annular groove 74 in the outer periphery of the action block 70, three attachment pieces 83, 84, 85 which are provided on the outer periphery of the body 81 and the plate element 86 which is provided between the attachment pieces 83, 84 to determine the position of the support member 80 (Fig. 16, Fig. 17).

The attachment pieces 83, 84, 85 are formed with lower edge portions 83a, 84a, 85a which are provided extending radially from the outer periphery of the annular body 81, vertical edge portions 83b, 84b, 85b which are erected in an axial direction of the body 81 from the ends of the lower edge portions, and upper edge portions 83c, 84c, 85c which are connected stepping from the ends of the vertical edge portions. Holes 83d, 84d, 85d are provided in upper edge portions 83c, 84c, 85c to receive screws 88 (Fig. 19).

### [Function of the Invention]

{Normal Tilting Movement}: For normal tilting movement, the sliding member 65 is locked to rotate as illustrated by Fig. 5 and stops in almost contacting the bottom of its cylindrical portion 66 with the inner surface of the front housing 21a.

The first motor 31 is rotated by operating a switch (not shown) to adjust the vertical direction angle of the mirror. The rotation of the motor is transmitted to the adjusting nut 35 via the worm wheel 34. The fin 30 of the adjusting nut is engaged in the axial groove 39 which is formed in the boss hole 38 of the worm wheel and the adjusting nut 35 rotates with the worm wheel 34 simultaneously (Fig. 2). The pawl 37 of the adjusting nut 35 is engaged with the screw rod 67 of the sliding member to push and rotate the adjusting nut 35 in an axial direction, thereby the mirror 11 is tilted around the central pivot 15 to adjust the vertical mirror angle (Fig. 2, Fig. 5).

The second motor 41 is rotated by operating a switch (not shown) to adjust the horizontal mirror angle. The rotation of the motor is transmitted to the adjusting nut 45 via the worm wheel 44. The fin 40 of the adjusting nut is engaged in the axial groove 49 which is formed in the boss hole 48 of the worm wheel 44 and the adjusting nut 45 rotates with the worm wheel 44 simultaneously (Fig. 3). The adjusting nut 45 is slid in axial direction by engagement of the pawl 47 of the adjusting nut 45 with the screw rod 28 to adjust the mirror angle. The adjusting nut 45 is rotated to be pushed in an axial direction, thereby the mirror 11 is tilted around the central pivot 15 to adjust the horizontal mirror angle (Fig. 3).

{Function of Changing the Mirror Angle Rapidly}: The mirror is in the tilted position as shown in solid lines in Fig. 5, and is to rapidly change its angle most downwardly by the third motor 51. By a switching operation, the motor 51 is rotated to rotate the fan shaped gear 60 and the action block 70 via the worm 53 and the twin gear 54. The sliding member 65 is rotationally locked and is axially pushed with a determined displacement degree by the engagement of the pin 77 of the action block 70 with the helical cam groove 69 of the sliding member 65. Thereby the adjusting nut 35 which is threadedly engaged with the screw slides, thereby changing the mirror angle rapidly from the position 122 to 124 as illustrated by Fig. 6.

By the rotation of the motor 51, when the fan shaped gear 60 is rotated via the worm 53 and the twin gear 54, the action block 70 is rotated with the fan shaped gear by the engagement of the pieces 63 inside of the fan shaped gear 60 and the slits 72 of the action block 70. During normal rotation of the motor 51, the fan shaped gear 60 contacts the stopper 108 and halts (Fig. 7) and during the reverse rotation of the motor, the gear 60 contacts the stopper 107 and halts (Fig. 9). The action block 70 is rotatably supported by an engagement of the four pawls 82 of the support member 80 in the annular groove 74 of the outer periphery and the action block resists chattering to increase the mirror sight ability.

The mirror is tilted first to the position 122 which is illustrated in Fig. 6, or to the position around it, by the device for adjusting the vertical direction mirror angle, and its angle can be further changed rapidly by the actuation of the motor 51 as described hereinbefore. It is possible that when the mirror is being used in the neutral position 120, it is preliminarily tilted to position 122 by operating the first motor 31 and is then changed to the position 124 by operating the third motor 51.

### [Effect of the Invention]

In accordance with the present invention, it is possible to achieve a normal tilting motion of the mirror in a vertical and horizontal direction by an electric remote control operation. When the driver wants to see the rearward area near the rear wheels of the vehicle, the cylindrical cam is slid in an axial direction by operating the motor for changing the mirror angle rapidly, and the movable pivot for adjusting the vertical reflection angle is shifted forwardly with a determined stroke so as to change the mirror angle rapidly to the downward sight enough to secure the rearward sight around the rear wheel of the vehicle. The rapid changing of the mirror angle can be mechanically and preliminarily set by the threaded cam groove which is provided on the sliding member so as to achieve the most accurate displacement value of the mirror angle. The action block is rotatably supported by the engagement of the plurality of pawl ends of the support member in the groove of the action block outer periphery and any chattering in the thrust direction of the acton block is eliminated, thereby the rear sight ability is increaded to provide a safe driving. The device of the present invention has a simple construction in which the thickness of the actuator unit housing can be compacted to achieve a simple assembling work and to be economical of spaces.

## Claims

1. A device for adjusting the reflection angle of a rearview minor for a vehicle, including a minor body (11), a minor holder (12) with a minor (13), an actuator unit (20) fixed in the minor body (11) for adjusting the minor reflection angle, first and second movable pivots (36, 46) disposed in the actuator unit housing (21a, 21b), first and second drive transmission elements each with a screw rod (67, 28) and a nut (35, 45) disposed in the housing for vertically and horizontally adjusting the reflection angle of the minor (13), and a means for changing the minor angle rapidly, which means is disposed in the housing (21a, 21b) in a position coaxial to the first movable pivot (36) to displace the minor surface to a determined wide angle (124, Fig. 6), and is formed with a rotatable cylindrical action block (70) inside of which a sliding member (65) is disposed which has a screw rod (67) which is threaded to engage via the nut (35) the first movable pivot and is axially shiftable by a rotation of the action block (70) driven by a motor (51), the action block (70) comprising a rotatable cylindrical main body (71) which is disposed on a coaxial line to the first screw rod (67), a gear (62) being disposed on the periphery of the action block (70) in a rotation-locked relation to the action block (70);
characterized in that the gear disposed on the periphery of the action block (70) is a fan type gear (60, 62);
an annular groove (74) is formed around the periphery of the cylindrical main body (71); and
a support member (80) fixed in the housing is provided with a plurality of pawls (82) engaged in the annular groove (74) of the action block (70) periphery surface for rotatably supporting the action block (70).

2. The device for adjusting the reflection angle of a rearview minor for a vehicle according to claim 1, characterized in that the movable pivots (36, 46) are spaced by a certain distance in an orthogonal direction from a central pivot (15) of the actuator unit (20) for adjusting the vertical and the horizontal reflection angle of the mirror disposed in the actuator unit housing (21a, 21b); pivot retainers (16, 17) are formed on a rear surface of the mirror holder (12) for receiving the movable pivots (36, 46), first and second motors (31, 41) and drive transmission elements (33, 34; 43, 44) respectively are disposed in the actuator unit housing for adjusting the reflection angle of the mirror, and adjusting nuts (35, 45) are formed on the movable pivots (36, 46); the first screw rod (67) of the sliding member (65) threadedly engages the first one of the adjusting nuts (35) which is connected with the first drive transmission element (33, 34); the second screw rod (28) threadedly engages the second adjusting nut (45) which is connected with the second drive transmission element (43, 44); and the means for changing the mirror angle rapidly downwardly for securing a rearward sight of the area of the rear wheels of the vehicle is disposed at the position of the first screw rod (67), which means is formed with the rotatable cylindrical action block (70), the sliding member (65) with the screw rod (67) disposed inside of the action block (70) and shifted via a cam means (69, 77) in the axial direction by a rotation of the action block (70), and the further motor (51) for actuating the action block, and the screw portion of the sliding member is threaded to engage the adjusting nut (35) of the first movable pivot (36).

3. The device for adjusting the reflection angle of a rearview minor according to claim 1 or 2, characterized in that the fan type gear (60) includes a gear portion (62) on the periphery of an annular main body (61); that the gear portion (62) engages with an intermediate gear (54) coupled to an output shaft of the motor (51); that the annular body (61) has a pair of projections (63) to engage in longitudinal slits (72) formed in a diameter direction of the cylindrical main body (71) of the action block (70); and that the sliding element (65) includes a cylindrical portion (66) with a botton, a cam (69) formed on the outer periphery of the cylindrical portion (66) for converting the rotation of the action block (70) to a movement in the axial direction of the sliding member (65), and the screw rod (67) provided extending over the height of the cylindrical portion (66) from the center of the botton thereof toward an opening side of the cylindrical portion for threadedly engaging with the first adjusting nut (35); the action block (70), the sliding member (65), the third motor (51) and the intermediate gear (54) being components of the means for rapidly changing the mirror angle.

4. The device for adjusting the reflection angle of a rearview mirror according to claim 3, characterized in that the actuator unit housing is formed by a front housing (21a) with a rear housing (21b) engaging each other; and the front housing (21a) is formed with a pair of arc-shaped elements (91, 92) for rotatably supporting the fan shaped gear (60) at the outside thereof and the action block (70) respectively at the inside thereof.

5. The device for adjusting the reflection angle of a rearview mirror according to claim 4, characterized in that the front housing (21a) of the actuator unit is formed with a recess (90) which has a shape capable of receiving the means for rapidly changing the mirror angle, including the fan shaped gear (60, 62) which is disposed on the periphery of the action block (70), the pair of arc-shaped guiding elements (91, 92) protruding from the recess, several pins (94, 95, 96) provided in the recess for rotationally fixing the sliding member (65) in a locking manner, three step portions (97, 98, 99) with threaded holes for fixing the support member (80), and stoppers (107, 108) for determining a rotation angle of the fan shaped gear (60, 62) which step portions and stoppers are provided on the edge portions of the recess (90).

6. The device for adjusting the reflection angle of a rearview mirror according to claims 3, 4 or 5, characterized in that the intermediate gear (54) is a twin gear in which an upper step is formed to be a worm wheel (55) to engage a worm (53) which comprises a drive transmission element (52) of the device, and a lower step thereof is unitedly formed with the worm wheel to be an ordinary gear (56) which engages the fan shaped gear (60, 62) so as to rotate a projecting sector surface (62) of the fan shaped gear through a determined angle into contact with one of stoppers (107, 108).

7. The device for adjusting the reflection angle of a rearview mirror according to any of claims 3 to 6, characterized in that the fan type gear (60) comprises the annular main body (61), the gear portion (62) formed as a fan sector on the outer periphery of the main body (61) and the pair of inside projections (63) provided opposite to a diameter at the inner side of an inside wall edge of the main body (61) to engage in the slits (72) which are formed on the cylindrical portion (71) of the action block (70) for simultaneously rotating the gear (60) and the action block (70) through the same angle.

8. The device for adjusting the reflection angle of a rearview mirror according to any of claims 3 to 7, characterized in that the support member (80) includes an annular main body (81) at the inside thereof rotatably supporting the action block (70), the plurality of pawls (82) protruding from the inner periphery edge of the body (81), three attachment pieces (83, 84, 85) provided on the outer periphery edge of the annular body (81) and a location plate (86) provided between adjacent attachment pieces (83, 84) at the annular body (81).

9. The device for adjusting the reflection angle of a rearview minor according to any of claims 3 to 8, characterized in that a worm mechanism (53, 54) for rapidly changing the minor angle comprises an output shaft (52) of the third motor (51), a coupling retainer (101) fixed at the root portion of the output shaft (52), a worm (53) loosely inserted in the output shaft and forming coupling teeth (102) on an end to engage in the coupling retainer (101), a bearing (104) disposed at the end of the output shaft (52) via a washer (103) and a bearing retainer (105) formed on an inner wall of the front housing (21a).

10. The device for adjusting the reflection angle of a rearview minor according to any of claims 1 to 9, characterized in that first and second drive transmission elements comprise worms (33, 43) which are fixed on a respective motor shaft (32, 42) and worm wheels (34, 44) which are engaged with the worms (33, 43), the first worm wheel (34) being supported between the upper surface of an arc-shaped guide (91, 92) at a front housing side and a step portion (93) of a rear housing side (Fig. 5) and the second worm wheel (44) being supported between the upper surface of a ring-shaped guide (110) at the front housing and a step portion (93a) of the rear housing side (Fig. 3).

## Patentansprüche

1. Vorrichtung zum Verstellen des Reflexionswinkels eines Rückblickspiegels für ein Fahrzeug, mit einem Spiegelkörper (11), einem Spiegelhalter (12) mit einem Spiegel (13), ferner einer Verstelleinheit (20), die im Spiegelkörper (11) zum Verstellen des Spiegelreflexionswinkels befestigt ist, ersten und zweiten beweglichen Drehköpfen (36, 46), die im Gehäuse (21a, 21b) der Verstelleinheit angeordnet sind, ersten und zweiten Antriebsübertragungselementen jeweils mit einem Gewindestift (67, 28) und einer Mutter (35, 45), die im Gehäuse für die vertikale und horizontale Verstellung des Reflexionswinkels des Spiegels (13) angeordnet sind, und einer Einrichtung zum schnellen Ändern des Spiegelwinkels, die im Gehäuse (21a, 21b) in einer Position koaxial zum ersten beweglichen Drehkopf (36) angeordnet ist, um die Spiegelfläche um einen gegebenen weiten Winkel (124, Fig. 6) zu verstellen, und mit einem drehbaren zylindrischen Betätigungsblock (70) gebildet ist, innerhalb dessen ein Gleitstück (65) angeordnet ist, das einen Gewindestift (67) aufweist, der zum Angriff über die Mutter (35) am ersten beweglichen Drehkopf verschraubt ist und durch eine Drehung des Betätigungsblocks (70), der durch einen Motor (51) angetrieben wird, axial verschiebbar ist, wobei der Betätigungsblock (70) einen drehbaren zylindrischen Hauptkörper (71) umfaßt, der auf einer Koaxiallinie mit dem ersten Gewindestift (67) angeordnet ist, und am Umfang des Betätigungsblocks (70) ein Zahnrad (62) in umdrehungs-gesperrter Beziehung zum Betätigungsblock (70) angeordnet ist;
dadurch gekennzeichnet, daß das am Umfang des Betätigungsblocks (70) angeordnete Zahnrad vom Zahnsegmenttyp (60, 62) ist;
daß eine Ringnut (74) um den Umfang des zylindrischen Hauptkörpers (71) gebildet ist; und
daß ein im Gehäuse festsitzendes Trägerglied (80) mit einer Mehrzahl von Klauen (82) versehen ist, die in die Ringnut (74) der Umfangsfläche des Betätigungsblocks (70) zum drehbaren Tragen des Betätigungsblocks (70) eingreifen.

2. Vorrichtung zum Verstellen des Reflexionswinkels eines Rückblickspiegels für ein Fahrzeug nach Anspruch 1, dadurch gekennzeichnet, daß die beweglichen Drehköpfe (36, 46) in einem bestimmten Abstand in rechtwinkliger Richtung von einem zentralen Drehgelenk (15) der Verstelleinheit (20) zum Verstellen des vertikalen und des horizontalen Reflexionswinkels des im Verstelleinheitgehäuse (21a, 21b) angeordneten Spiegels positioniert sind; daß zur Aufnahme der beweglichen Drehköpfe (36, 46) Gelenkschalen (16, 17) an der Rückfläche des Spiegelhalters (12) gebildet sind, erste und zweite Motoren (31, 41) und Antriebsübertragungselemente (33, 34; 43, 44) jeweils zum Verstellen des Spiegelreflexionswinkels im Gehäuse der Verstelleinheit angeordnet sind und Verstellmuttern (35, 45) an den beweglichen Drehköpfen (36, 46) gebildet sind; daß am ersten Gewindestift (67) des Gleitstücks (65) im Schraubangriff die erste der Verstellmuttern (35) angreift, die mit dem ersten Antriebsübertragungselement (33, 34) verbunden ist; daß am zweiten Gewindestift (28) im Schraubangriff die zweite Verstellmutter (45) angreift, die mit dem zweiten Antriebsübertragungselement (43, 44) verbunden ist; daß die Einrichtung zum schnellen Ändern des Spiegelwinkels nach unten zur Sicherung eines Rückblicks auf den Bereich der Fahrzeughinterräder an der Position des ersten Gewindestifts (67) angeordnet ist und aus folgenden Teilen besteht: dem drehbaren zylindrischen Betätigungsblock (70), dem Gleitstück (65) mit dem Gewindestift (67), das innerhalb des Betätigungsblocks (70) angeordnet ist und über eine Nockeneinrichtung (69, 77) durch eine Verdrehung des Betätigungsblocks (70) in Axialrichtung verschiebbar ist, und dem weiteren Motor (51) zum Betätigen des Betätigungsblocks; und daß der Gewindestift des Gleitstücks zum Angriff an der Verstellmutter (35) des ersten Drehkopfs (36) mit dieser verschraubt ist.

3. Vorrichtung zum Verstellen des Reflexionswinkels eines Rückblickspiegels nach Anspruch 1 oder 2, dadurch gekennzeichnet, daß das Segmentzahnrad (60) einen Verzahnungsteil (62) am Umfang eines Haupt-Ringkörpers (61) umfaßt; daß am Verzahnungsteil (62) ein Zwischenzahnrad (54) angreift, das mit der Abtriebswelle des Motors (51) gekoppelt ist; daß der Ringkörper (61) zwei Vorsprünge (63) zum Eingriff in längsverlaufende Schlitze (72), die in Durchmesserrichtung des zylindrischen Hauptkörpers (71) des Betätigungsblocks (70) gebildet sind, aufweist; und daß das Gleitstück (65) einen zylindrischen Teil (66) mit einem Boden, einen am Außenumfang des zylindrischen Teils (66) gebildeten Nocken (69) zum Umwandeln der Drehbewegung des Betätigungsblocks (70) in eine axial gerichtete Bewegung des Gleitstücks (65) und den Gewindestift (67), der sich zum Schraubangriff an der ersten Verstellmutter (35) über die Höhe des zylindrischen Teils (66) vom Zentrum seines Bodens zu seiner Öffnungsseite erstreckt, umfaßt; wobei der Betätigungsblock (70), das Gleitstück (65), der dritte Motor (51) und das Zwischenzahnrad (54) Komponenten der Einrichtung zum schnellen Ändern des Spiegelwinkels sind.

4. Vorrichtung zum Verstellen des Reflexionswinkels eines Rückblickspiegels nach Anspruch 3, dadurch gekennzeichnet, daß das Verstelleinheitgehäuse aus einem Vordergehäuse (21a) mit einem Rückgehäuse (21b), die ineinandergreifen, gebildet ist; und daß das Vordergehäuse (21a) mit zwei bogenförmigen Elementen (91, 92) zum verdrehbaren Halten des Segmentzahnrads (60) an deren Außenseite und des Betätigungsblocks (70) an deren Innenseite ausgebildet ist.

5. Vorrichtung zum Verstellen des Reflexionswinkels eines Rückblickspiegels nach Anspruch 4, dadurch gekennzeichnet, daß das Vordergehäuse (21a) der Verstelleinheit mit einer Vertiefung (90) versehen ist, die eine zur Aufnahme der Einrichtung zum schnellen Ändern des Spiegelwinkels geeignete Form aufweist, einschließlich des Segmentzahnrads (60, 62), das am Umfang des Betätigungsblocks (70) angeordnet ist, der beiden bogenförmigen Führungselemente (91, 92), die aus der Vertiefung vorstehen, verschiedener Stiftvorsprünge (94, 95, 96), die zum rotationsmäßigen Festlegen des Gleitstücks (65) in verriegelnder Weise in der Vertiefung vorhanden sind, drei Stufenteilen (97, 98, 99) mit Gewindebohrungen zum Festlegen des Trägerglieds (80) und Anschläge (107, 108) zum Bestimmen eines Rotationswinkels des Segmentzahnrads (60, 62), wobei die Stufenteile und Anschläge an Randteilen der Vertiefung (90) vorhanden sind.

6. Vorrichtung zum Verstellen des Reflexionswinkels eines Rückblickspiegels gemäß den Ansprüchen 3, 4 oder 5, dadurch gekennzeichnet, daß das Zwischenzahnrad (54) ein Doppelzahnrad ist, bei dem eine obere Stufe als Schneckenrad (55) zum Angriff einer Schnecke (53), die ein Antriebsübertragungselement (52) der Vorrichtung umfaßt, ausgebildet ist und eine untere Stufe davon einstückig mit dem Schneckenrad als gewöhnliches Zahnrad (56) ausgebildet ist, das mit dem Segmentzahnrad (60, 62) kämmt, um so eine vorstehende Sektorfläche (62) des Segmentzahnrads um einen gegebenen Winkel bis zum Kontakt mit einem der Anschläge (107, 108) zu verdrehen.

7. Vorrichtung zum Verstellen des Reflexionswinkels eines Rückblickspiegels nach einem der Ansprüche 3 bis 6, dadurch gekennzeichnet, daß das Segmentzahnrad (60) den Ring-Hauptkörper (61), den als Sektor am Außenumfang des Hauptkörpers (61) gebildeten Verzahnungsteil (62) und die beiden Innenvorsprünge (63), die gegenüber von einem Durchmesser an der Innenseite eines Innenwandrands des Hauptkörpers (61) zum Eingriff in die Schlitze (72) gebildet sind, die ihrerseits am zylindrischen Teil (71) des Betätigungsblocks (70) zum gleichzeitigen Verdrehen des Zahnrads (60) und des Betätigungsblocks (70) um den gleichen Winkel gebildet sind, umfaßt.

8. Vorrichtung zum Verstellen des Reflexionswinkels eines Rückblickspiegels nach einem der Ansprüche 3 bis 7, dadurch gekennzeichnet, daß das Trägerglied (80) einen ringförmigen Hauptkörper (81), der an seiner Innenseite drehbar den Betätigungsblock (70) trägt, die vom inneren Umfangsrand des Körpers (81) vorstehenden mehreren Klauen (82), drei Befestigungsstücke (83, 84, 85), die am äußeren Umfangsrand des ringförmigen Körpers (81) gebildet sind, und eine Positionierungsplatte (86), die zwischen benachbarten Befestigungsstücken (83, 84) am ringförmigen Körper (81) angeordnet ist, umfaßt.

9. Vorrichtung zum Verstellen des Reflexionswinkels eines Rückblickspiegels nach einem der Ansprüche 3 bis 8, dadurch gekennzeichnet, daß ein Schneckenmechanismus (53, 54) zum schnellen Ändern des Spiegelwinkels eine Abtriebswelle (52) des dritten Motors (51), eine Kupplungsschale (101), die fest am Fußteil der Abtriebswelle (52) sitzt, eine Schnecke (53), die locker in die Abtriebswelle eingesetzt ist und Kupplungszähne (102) an einem Ende zum Angreifen an der Kupplungsschale (101) bildet, ein Lager (104), das am Ende der Abtriebswelle (52) über eine Scheibe (103) angeordnet ist, und eine Lagerschale (105), die an der Innenwand des Vordergehäuses (21a) gebildet ist, umfaßt.

10. Vorrichtung zum Verstellen des Reflexionswinkels eines Rückblickspiegels nach einem der Ansprüche 1 bis 9, dadurch gekennzeichnet, daß erste und zweite Antriebsübertragungselemente Schnecken (33, 43), die fest auf einer jeweiligen Motorwelle (32, 42) sitzen, und Schneckenräder (34, 44), die an den Schnecken (33, 43) angreifen, umfassen, wobei das erste Schneckenrad (34) zwischen der oberen Fläche einer bogenförmigen Führung (91, 92) an einer Vordergehäuseseite und einem Stufenteil (93) einer Rückgehäuseseite (Fig. 5) gehaltert ist und das zweite Schneckenrad (44) zwischen der oberen Fläche einer ringförmigen Führung (110) am Vordergehäuse und einem Stufenteil (93a) der Rückgehäuseseite (Fig. 3) gehaltert ist.

## Revendications

1. Dispositif pour le réglage de l'angle de réflexion d'un rétroviseur pour véhicule, comprenant un corps de rétroviseur (11), un support de rétroviseur (12) muni d'un miroir (13), une unité formant actionneur (20) fixée au corps de rétroviseur (11) pour régler l'angle de réflexion du rétroviseur, un premier et un second pivots mobiles (36, 46) disposés dans le boîtier (21a, 21b) de l'unité formant actionneur, un premier et un second éléments de transmission d'entraînement comportant chacun une tige de vis (67, 28) et un écrou (35, 45) disposé dans le boîtier pour régler verticalement et horizontalement l'angle de réflexion du miroir (13) et des moyens pour modifier rapidement l'angle du rétroviseur, lesquels moyens sont disposés dans le boîtier (21a, 21b) dans une position coaxiale au premier pivot mobile (36) pour déplacer la surface du miroir sur un angle étendu déterminé (124, figure 6) et sont pourvus d'un bloc d'actionnement cylindrique rotatif (70), à l'intérieur duquel est disposé un élément coulissant (65) équipé d'une tige de vis (67) qui est filetée pour engrener, par l'intermédiaire de l'écrou (35), avec le premier pivot mobile et est déplaçable axialement sous l'effet d'une rotation du bloc d'actionnement (70) entraîné par un moteur (51), le bloc d'actionnement (70) comprenant un corps principal cylindrique rotatif (71), qui est disposé sur une ligne coaxiale à la première tige de vis (67), un pignon (62) étant disposé sur la périphérie du bloc d'actionnement (70) en étant bloqué contre toute rotation par rapport au bloc d'actionnement (70);
caractérisé en ce que
le pignon disposé sur la périphérie du bloc d'actionnement (70) est un pignon en forme d'éventail (60, 62);
une gorge annulaire (74) est formée autour de la périphérie du corps principal cylindrique (71); et
un élément de support (80) fixé dans le boîtier est équipé d'une pluralité de cliquets (82) s'engageant dans la gorge annulaire (74) de la surface périphérique du bloc d'actionnement (70) pour supporter à rotation le bloc d'actionnement (70).

2. Dispositif pour régler l'angle de réflexion d'un rétroviseur pour véhicule selon la revendication 1, caractérisé en ce que les pivots mobiles (36, 46) sont séparés par une certaine distance dans une direction perpendiculaire à partir d'un pivot central (15) de l'unité formant actionneur (20) pour régler l'angle horizontal et l'angle vertical de réflexion du miroir disposé dans le boîtier (21a, 21b) de l'unité formant actionneur; des dispositifs (16, 17) de retenue des pivots sont formés sur une surface arrière du support (12) du rétroviseur pour recevoir les pivots mobiles (36, 46), un premier et un second moteurs (31, 41) et des éléments de transmission d'entraînement (33, 34; 43, 44) sont disposés respectivement dans le boîtier de l'unité formant actionneur pour régler l'angle de réflexion du rétroviseur, et des écrous de réglage (35, 45) sont formés sur les pivots mobiles (36, 46); la première tige de vis (67) de l'élément coulissant (65) engrène par vissage avec le premier des écrous de réglage (35), lequel est raccordé au premier élément de transmission d'entraînement (33, 34); la seconde tige de vis (28) engrène par vissage avec le second écrou de réglage (45) qui est raccordé au second élément de transmission d'entraînement (43, 44); et les moyens pour modifier rapidement l'angle du miroir vers le bas pour assurer une vision arrière de la zone des roues arrière du véhicule sont disposés dans la position de la première tige de vis (67), lesquels moyens sont formés par le bloc d'actionnement cylindrique rotatif (70), l'élément coulissant (65) équipé de la tige de vis (67), disposé à l'intérieur du bloc d'actionnement (70) et déplacé à l'aide de moyens formant cames (69, 77) dans la direction axiale, sous l'effet d'une rotation du bloc d'actionnement (70) et en outre le moteur (51) servant à actionner le bloc d'actionnement, et la partie formant vis de l'élément d'actionnement est filetée de manière à engrener avec l'écrou de réglage (35) du premier pivot mobile (36).

3. Dispositif pour régler l'angle de réflexion d'un rétroviseur selon la revendication 1 ou 2, caractérisé en ce que le pignon de type en forme d'éventail (60) comprend une partie formant pignon (62) située sur la périphérie d'un corps annulaire principal (61); que la partie formant pignon (62) engrène avec un pignon intermédiaire (54) couplé à un arbre de sortie du moteur (51); que le corps annulaire (61) comporte deux parties saillantes (63) destinées à s'engager dans des fentes longitudinales (72) formées dans une direction diamétrale du corps principal cylindrique (71) du bloc d'actionnement (70); et que l'élément coulissant (65) comprend une partie cylindrique (66) pourvue d'un fond, une came (69) formée sur la périphérie extérieure de la partie cylindrique (66) pour convertir la rotation du bloc d'actionnement (70) en un déplacement dans la direction axiale de l'élément coulissant (65) et une tige de vis (67) disposée de manière à s'étendre au-delà de la hauteur de la partie cylindrique (66) à partir du centre de son fond en direction d'un côté d'ouverture de la partie cylindrique pour son engrènement par vissage avec le premier écrou de réglage (35); le bloc d'actionnement (70), l'élément coulissant (65), le troisième moteur (51) et le pignon intermédiaire (54) étant des composants des moyens permettant de modifier rapidement l'angle du rétroviseur.

4. Dispositif pour régler l'angle de réflexion d'un rétroviseur selon la revendication 3, caractérisé en ce que le boîtier de l'unité formant actionneur est formé par un boîtier avant (21a) pourvu d'un boîtier arrière (21b), qui engrènent mutuellement; et le boîtier avant (21a) est pourvu d'une paire d'éléments de forme arquée (91, 92) permettant de supporter à rotation le pignon en forme d'éventail (60) sur son côté extérieur de le bloc d'actionnement (70) respectivement sur son côté intérieur.

5. Dispositif pour régler l'angle de réflexion d'un rétroviseur selon la revendication 4, caractérisé en ce que le boîtier avant (21a) de l'unité formant actionneur comporte un renfoncement (90), qui présente une forme apte à recevoir les moyens pour modifier rapidement l'angle du rétroviseur, comprenant le pignon en forme d'éventail (60, 62), qui est disposé sur la périphérie du bloc d'actionnement (70), la paire d'éléments de guidage de forme arquée (91, 92) faisant saillie hors du renfoncement, plusieurs broches (94, 95, 96) prévues dans le renfoncement pour fixer en rotation l'élément coulissant (65) dans un mode de blocage, trois parties étagées (97, 98, 99) comportant des trous taraudés pour fixer l'élément de support (80), et des butées (107, 108) pour déterminer un angle de rotation du pignon en forme d'éventail (60, 62), lesquelles parties étagées et butées sont prévues sur les parties marginales du renfoncement (90).

6. Dispositif pour régler l'angle de réflexion d'un rétroviseur selon les revendications 3, 4 ou 5, caractérisé en ce que le pignon intermédiaire (54) est un pignon double, dans lequel une partie étagée supérieure est agencée de manière à former une roue tangente (55) destinée à engrener avec une vis sans fin (53), qui comprend un élément de transmission d'entraînement (52) du dispositif, et dont une partie étagée inférieure est réunie d'un seul tenant à la roue tangente de manière à constituer un pignon ordinaire (56), qui engrène avec le pignon en forme d'éventail (60, 62) de manière à faire tourner une surface en forme de secteur saillant (62) du pignon en forme d'éventail, sur un angle déterminé pour l'amener en contact avec l'une des butées (107, 108).

7. Dispositif pour régler l'angle de réflexion d'un rétroviseur selon l'une quelconque des revendications 3 à 6, caractérisé en ce que le pignon en forme d'éventail (60) comprend le corps principal annulaire (61), la partie (62) du pignon agencée en forme de secteur en forme d'éventail sur la périphérie extérieure du corps principal (61) et la paire de parties saillantes intérieures (63) prévues à l'opposé d'un diamètre sur le côté intérieur d'un bord de paroi intérieur du corps principal (61) pour s'engager dans les fentes (72) qui sont formées sur la partie cylindrique (71) du bloc d'actionnement (70) pour faire tourner simultanément le pignon (60) et le bloc d'actionnement (70) sur le même angle.

8. Dispositif pour régler l'angle de réflexion d'un rétroviseur selon l'une quelconque des revendications 3 à 7, caractérisé en ce que l'élément de support (80) comprend un corps principal annulaire (81) supportant à rotation en son intérieur le bloc d'actionnement (70), la série de cliquets (82), qui font saillie à partir du bord périphérique intérieur du corps (81), trois éléments de fixation (83, 84, 85) prévus sur le bord périphérique extérieur du corps annulaire (81) et une plaque de positionnement (86) prévue entre des parties de fixation voisines (83, 84) sur le corps annulaire (81).

9. Dispositif pour régler l'angle de réflexion d'un rétroviseur selon l'une quelconque des revendications 3 à 8, caractérisé en ce qu'un mécanisme à vis sans fin (53, 54) prévu pour modifier rapidement l'angle du rétroviseur comprend un arbre de sortie (52) du troisième moteur (51), un dispositif de retenue d'accouplement (101) fixé à la partie de base de l'arbre de sortie (52), une vis sans fin (53) insérée de façon lâche sur l'arbre de sortie et formant à une extrémité des dents d'accouplement (102) destinées à s'engager dans le dispositif de retenue d'accouplement (101), un palier (104) disposé sur l'extrémité de l'arbre de sortie (52) au moyen d'une rondelle (103) et un dispositif de retenue de palier (105) formé sur une paroi intérieure du boîtier avant (21a).

10. Dispositif pour régler l'angle de réflexion d'un rétroviseur selon l'une quelconque des revendications 1 à 9, caractérisé en ce que les premier et second éléments de transmission d'entraînement comprennent des vis sans fin (33, 43), qui sont fixées sur des arbres respectifs (32, 42) de moteurs, et des roues tangentes (34, 44), qui engrènent avec les vis sans fin (33, 43), la première roue tangente (34) étant supportée entre la surface supérieure d'un guide de forme arquée (91, 92) sur un côté du boitier avant, et une partie étagée (93) sur un côté du boîtier arrière (figure 5), et la seconde roue tangente (44) étant supportée entre la surface supérieure d'un guide de forme annulaire (110) sur le boîtier avant et une partie étagée (93a) du côté du boîtier arrière (figure 3).
